# EUROPEAN PATENT SPECIFICATION

(11) **EP 0 353 297 B1**
(45) Date of publication and mention of the grant of the patent: **16.03.1994**
(21) Application number: 89902673.6
(22) Date of filing: 26.01.1989
(51) Int. Cl.: C04B 35/58

(54) **A SELF-REINFORCED SILICON NITRIDE CERAMIC OF HIGH FRACTURE TOUGHNESS AND A METHOD OF PREPARING THE SAME**
SELBSTARMIERTE SILICIUMNITRIDKERAMIK HOHER BRUCHZÄHIGKEIT UND VERFAHREN ZU DEREN HERSTELLUNG
CERAMIQUE AUTO-RENFORCEE EN NITRURE DE SILICIUM A TENACITE ELEVEE A LA RUPTURE ET SON PROCEDE DE FABRICATION.

(30) Priority: 27.01.1988 US 148748
(43) Date of publication of application: 07.02.1990
(73) Proprietor: THE DOW CHEMICAL COMPANY, Midland, Michigan 48640 (US)
(72) Inventor: PYZIK, Aleksander, J., Midland, MI 48640 (US); DUBENSKY, William, J., Traverse City, MI 49684 (US); SCHWARZ, Douglas, B., Midland, MI 48640 (US); BEAMAM, Donald, Midland, MI 48640 (US); ROSSOW, Harald, E., Midland, MI 48640 (US)
(74) Representative: Burford, Anthony Frederick
(86) International application number: PCT/US89/00324
(87) International publication number: WO 89/07093

(56) References cited:
- EP-A- 228 022
- EP-A- 0 100 380
- EP-A- 0 251 522
- JP-A- 5 864 274
- JP-A- 5 921 413
- JP-A- 6 178 657
- JP-A-61 106 430
- US-A- 3 950 464
- US-A- 4 004 937
- US-A- 4 025 351
- US-A- 4 046 580
- US-A- 4 097 293
- US-A- 4 119 689
- US-A- 4 179 301
- US-A- 4 218 257
- US-A- 4 227 842
- US-A- 4 279 657
- US-A- 4 296 065
- US-A- 4 323 325
- US-A- 4 406 668
- US-A- 4 407 970
- US-A- 4 511 525
- US-A- 4 543 345
- US-A- 4 603 116
- US-A- 4 609 633
- US-A- 4 652 276
- US-A- 4 699 890
- US-A- 4 717 693
- US-A- 4 734 234
- US-A- 4 753 764
- PATENT ABSTRACTS OF JAPAN, vol. 10, no. 161 (C-352)[2217], 10th June 1986; & JP-A-61 14 200 (NIPPON OIL SEAL KOGYO K.K.) 22-01-1986
- PATENT ABSTRACTS OF JAPAN, vol. 9, no. 28 (C-264)[1751], 6th February 1985; & JP-A-59 174 600 (TOYOTA JIDOSHA K.K.) 03-10-1984

## Description

This invention pertains to a silicon nitride (Si₃N₄) ceramic body and a process for preparing the ceramic body.

Silicon nitride ceramics are recognized for their excellent mechanical and physical properties, including good wear resistance, low coefficient of thermal expansion, good thermal shock resistance, high creep resistance and high electrical resistivity. In addition, silicon nitride ceramics are resistant to chemical attack, particularly to oxidation. For these attributes silicon nitride is useful in a variety of wear and high temperature applications, such as cutting tools and parts in pumps and engines.

Failure of silicon nitride ceramics is generally associated with brittleness and flaws. The object therefore is to prepare a silicon nitride ceramic with high fracture toughness (K_{IC}) and strength. Fracture strength is directly proportional to the fracture toughness and inversely proportional to the square root of the flaw size. High fracture toughness combined with small flaw Size is therefore highly desirable. Monolithic silicon nitride, however, has a relatively low fracture toughness of about 5 MPa (m)^{½}.

US-A-4,543,345 teaches that the addition of silicon carbide whiskers to ceramic materials can result in an increase in the fracture toughness. Silicon carbide whiskers have a single crystal structure and are in a size range of about 0.6 µm in diameter and 10 µm to 80 µm in length. This technique, however, does not provide significant toughening in the case of silicon nitride ceramics. Moreover, the use of silicon carbide whiskers is associated with serious processing problems. The whiskers have a tendency to agglomerate and settle. It is difficult to deagglomerate the whiskers without significantly destroying the whiskers' length. In addition, the whiskers are difficult to manufacture; thus, they display inconsistent properties and are costly. It would be highly desirable to have a silicon nitride ceramic of high fracture toughness which does not require the presence of silicon carbide whiskers.

US-A-4,669,890 discloses a highly dense silicon nitride sintered body containing predetermined amounts of yttria (Y₂O₃), magnesia (MgO), and ceria (CeO) and a method for preparing such a body. The amounts are, based upon weight of the sintered body, 2 to 15 percent by weight of Y as Y₂O₃, 1 to 10 percent by weight of Ce as CeO, 1 to 10 percent by weight of Mg as MgO and 75 to 95 percent by weight of Si₃N₄. The bodies have, as shown in Table I of US-A-4,669,890 a demonstrated room temperature mechanical strength (four point bending test) of 670 to 750 MPa. It would be very desirable to have a silicon nitride ceramic with a fracture strength (room temperature) of 825 MPa or higher and a fracture toughness greater than about 6 MPa (m)^{½}.

US-A-4,004,937 and related US-A-4,025,351 disclose a silicon nitride-based ceramic formed from a powder mixture containing 60 to 92 mole percent silicon nitride with the balance being metal oxide. The metal oxide component consists of at least one of MgO, ZnO and NiO and at least one of Al₂O₃, Cr₂O₃, Y₂O₃, TiO₂ and SnO₂. The mole ratio of the first group to the second group ranges from 1:9 to 9:1. In one embodiment, the mixed metals are heated to between 1600 and 1800°C for 2 to 3 hours. In a second embodiment, the mixed metals are first converted to a spinel which is then ground, mixed with the silicon nitride and sintered. A small quantity of CaO or CoO may also be included in the silicon nitride-based ceramic.

US-A-4,406,668 discloses a coated ceramic cutting tool comprising a densified silicon nitride substrate body having at least one hard, adherent coating layer consisting essentially of a refractory metal nitride. The substrate body consists essentially of a first phase of silicon nitride and a second refractory phase comprising silicon nitride and an effective amount of a single densification additive. The densification additive is selected from the group consisting of silicon dioxide, aluminum oxide, magnesium oxide, yttrium oxide, zirconium oxide, hafnium oxide, the lanthanide rare earth oxides, and mixtures thereof. The coating is a nitride of titanium, vanadium, chromium, zirconium, niobium, molybdenum, hafnium, tantalum, tungsten or mixtures thereof.

It is known that the high temperature strength of hot-pressed silicon nitride ceramics can be increased by crystallization of the grain-boundary glass phase (second phase). This has been demonstrated in a hot-pressed composite containing beta(β)-silicon nitride and a crystalline second phase of Si₃N₄·Y₂O₃, as reported by Akihiko Tsuge et al. in the *Journal of the American Ceramics Society*, 58, 323-326 (1975). However, the fracture toughness of this silicon nitride is only 5 to 6 MPa (m)^{½}.

It is also known that the presence of β-silicon nitride with a high aspect ratio can increase the fracture toughness of silicon nitride ceramics, as reported by F. F. Lange, in the *Journal of the American Ceramics Society*, 62 (12), 1369-1374, (1983). "Aspect ratio" is defined as the ratio of the length of the whisker to the diameter or width of the whisker. Thus, whiskers with a high aspect ratio are fibrous in nature. If such whiskers are also strong, crack propagation must take a tortuous path around the whiskers, thereby leading to high fracture toughness. The transformation of alpha(α)-silicon nitride to β-silicon nitride takes place above 1600°C; however, crystals of the beta phase precipitate usually as a mixture of equiaxed grains and elongated grains with a low aspect ratio. Reproducible control of the aspect ratio is a difficult problem.

Typically, the prior art is silent with regard to aspect ratio and fracture toughness of silicon nitride ceramics. US-A-4,279,657, for example, discloses a powder dispersion containing silicon nitride and magnesium oxide which is hot-pressed to form a light-transmitting silicon nitride ceramic. The ceramic is disclosed to comprise more than 50 weight percent β-silicon nitride ranging in grain size from 1 µm to 10 µm, but typically less than 5 µm. This patent teaches that impurities, such as calcium, in a total amount greater than 0.1 weight percent are undesirable. US-A-4,227,842 discloses a cutting tool consisting essentially of beta phase silicon nitride and yttrium oxide. The tool is prepared by hot-pressing a powder mixture of α-silicon nitride and yttrium oxide to obtain a ceramic of 100 percent theoretical density.

US-A-4,652,276 teaches a cutting tool comprising a granular phase consisting essentially of β-silicon nitride and an intergranular amorphous phase consisting essentially of magnesium oxide from 0.5 to 10 weight percent, yttrium oxide from 2.5 to 10 weight percent, silicon oxide in an amount less than 2.5 weight percent, and the balance less than 5 weight percent impurities such as aluminum. The tool is prepared by hot-pressing. Example 1 of US-A-4,652,276 discloses the hot pressing of a silicon nitride/magnesium oxide/yttrium oxide powder mixture containing a small amount of tungsten carbide (derived from the use of WC-Co grinding balls when ball milling the powder mixture). It is stated that the tungsten pick-up was less than 1 wt%.

US-A-4609633 discloses silicon nitride sintered bodies comprising (A) 0.5 to 25 weight percent of at least one oxide, nitride or oxynitride of scandium, yttrium or a lanthanide element; (B) 0.2 to 30 weight percent of at least one oxide, nitride or oxynitride of a Group IIa element or a nitride or oxynitride of a Group IIIb element; and (C) silicon nitride and inevitable impurities. It is stated that the body cannot have combinations of a rare earth oxide (A) with a Group IIa oxide (B) (see column 2, lines 17/20) but it is apparent from the exemplified bodies (see Samples 1 to 4 and 15 to 18) that both a rare earth oxide (A) and a Group IIa oxide (B) can be present if a nitride or oxynitride (A) or (B) also is present.

The composition of US-A-4609633 can additionally include one or more carbides or nitrides of a Group IVa, Va, or VIa element to enhance wear resistance and an oxide, nitride or oxynitride of a Group Ia element to enhance sinterability and densification. However, there is no exemplification of such compositions and, except for SiO₂, no information as to the content of said additional components.

EP-A-0107349 discloses silicon nitride sintered bodies formed from silicon nitride containing at least one sintering additive selected from MgO, Al₂O₃ and Y₂O₃ and, as a whisker formation agent, silicon or a silicon derivative and optionally carbon or an organic compound yielding carbon on thermal decomposition. It is stated that less than 1 weight percent whisker formation agent is not effective.

It would be very desirable to have a silicon nitride ceramic of high fracture toughness and high fracture strength. It would be advantageous if such a strong silicon nitride ceramic could be prepared without separately adding separately produced silicon carbide reinforcing whiskers. Moreover, it would be highly desirable to have a process which would be reproducible, inexpensive, and amenable to industrial scale-up for preparing such a tough and strong silicon nitride ceramic.

One aspect of this invention is a process for preparing a self-reinforced silicon nitride ceramic body containing predominately β-silicon nitride whiskers having a high average aspect ratio. The process comprises preparing a powder mixture comprising:
(a) silicon nitride in an amount sufficient to provide a ceramic body;
(b) an oxide of magnesium in an amount sufficient to promote densification of the powder;
(c) an oxide of yttrium in an amount sufficient to promote the essentially complete conversion of the starting silicon nitride to β-silicon nitride; and
(d) at least one whisker growth enhancing compound in an amount sufficient to promote the formation of β-silicon nitride whiskers, said compound being a boride, carbide or oxide of an element selected from those of atomic number 3, 4, 11, 19-32, 34, 37, 38, 40-52, 55-73, 75-79, 81-84, 87, 88, 90, 91, 93, and 95-103 or a boride or oxide of tungsten, provided that, when the whisker growth enhancing compound is an oxide of an element of atomic number 21, 58 to 71, 90, 91, 93 or 95 to 103, the powder mixture does not include a nitride or oxynitride of an element of atomic. number 4, 5, 12, 13, 20, 31, 38, 49, 56, 81 or 88,
and hot-pressing the powder mixture under conditions such that densification and *in situ* formation of β-silicon nitride whiskers having a high average aspect ratio occur. In this manner a self-reinforced silicon nitride ceramic body having a fracture toughness greater than 6 MPa (m)^{½}, as measured by the Chevron notch technique described hereinbelow, is formed.

For the purposes of the present invention a "high" average aspect ratio means an average aspect ratio of at least 2.5.

The powder mixture optionally includes aluminum nitride or boron nitride in an amount of 0.01 to 5 weight percent, based upon total powder mixture weight.

Another aspect of this invention is a silicon nitride ceramic body having a fracture toughness greater than 6 MPa (m)^{½}, as measured by the Chevron notch technique described hereinbelow, comprising:
(a) a crystalline phase of β-silicon nitride of which at least 20 volume percent, as measured in a plane by scanning electron microscopy, in the form of whiskers having an average aspect ratio of at least 2.5; and
(b) a glassy phase in an amount not greater than 35 weight percent of the total weight comprising an oxide of magnesium; an oxide of yttrium; silica, and at least one beta-silicon nitride whisker growth enhancing compound, said compound being a boride, carbide or oxide of an element selected from those of atomic number 3, 4, 11, 19-32, 34, 37, 38, 40-52, 55-73, 75-79, 81-84, 87, 88, 90, 91, 93, and 95-103 or a boride or oxide of tungsten, provided that, when the whisker growth enhancing compound is an oxide of an element of atomic number 21, 58 to 71, 90, 91, 93 or 95 to 103, the powder mixture does not include a nitride or oxynitride of an element of atomic number 4, 5, 12, 13, 20, 31, 38, 49, 56, 81 or 88.

The glassy phase optionally contains an amount, e.g., up to 15.0 percent by weight of the glassy phase, of aluminum nitride or boron nitride.

Preferably, the whisker growth enhancing compound is selected from borides, carbides and oxides of calcium, sodium, potassium, scandium, titanium, vanadium, chromium, manganese, iron, cobalt, nickel, copper, zinc, strontium, zirconium, niobium, barium and lanthanum.

In a third aspect, this invention is a cutting tool comprising the above-identified silicon nitride ceramic body.

Unexpectedly, the silicon nitride ceramic body of this invention exhibits a significantly higher fracture toughness than the monolithic or whisker-reinforced silicon nitride ceramics of the prior art. Moreover, if the fracture toughness of the silicon nitride ceramic of this invention is normalized with respect to density, the normalized fracture toughness and fracture strength are among the highest known for any ceramic material. Advantageously, the silicon nitride ceramic of this invention is self-reinforced and does not require the presence of expensive silicon carbide whiskers. More advantageously, the process for preparing the novel, self-reinforced silicon nitride ceramic body of this invention is reproducible, amenable to industrial scale-up, and less expensive than processes using silicon carbide whisker reinforcement.

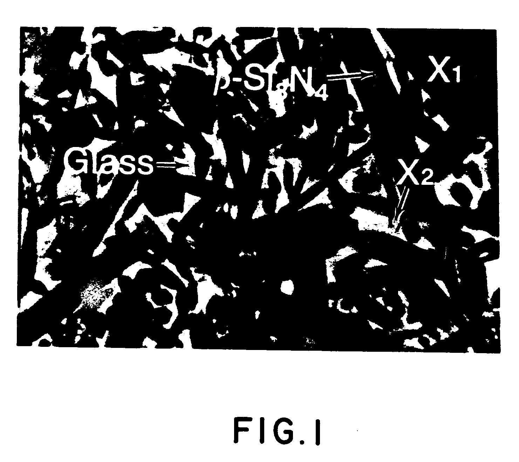

Figure 1 is a photomicrograph of the silicon nitride ceramic composition of this invention. This photomicrograph is representative of the preferred embodiments of this invention. Elongated whiskers of β-silicon nitride are readily observed.

The silicon nitride starting material used in preparing the ceramic body of this invention can be any silicon nitride powder, including the crystalline forms of α-silicon nitride and β-silicon nitride, or noncrystalline amorphous silicon nitride, or mixtures thereof. Preferably, the silicon nitride powder is predominately in the alpha crystalline form or the amorphous form, or mixtures thereof. More preferably, the starting silicon nitride is predominately in the alpha crystalline form. It is also advantageous if the preferred starting powder possesses a high α/β weight ratio. Preferably, the starting powder contains no greater than 20 weight percent β-silicon nitride; more preferably, no greater than 10 weight percent β-silicon nitride; most preferably, no greater than 6 weight percent β-silicon nitride.

Generally, the higher the purity of the starting silicon nitride powder, the better will be the properties of the finished ceramic body. Depending on the source, however, the silicon nitride powder may contain nonmetallic impurities. Some impurities may be tolerated in the powder, although it is preferred to minimize these as much as possible. Oxygen, for example, is present to some extent in the form of silica, SiO₂, which usually is found as a coating on the surface of the silicon nitride particles. Preferably, the oxygen content is no greater than about 5 weight percent. Above this preferred upper limit, the silica may create a large glassy phase which may lower the high temperature properties of the finished ceramic. More preferably, the oxygen content is no greater than 2.5 weight percent; most preferably, no greater than 2.0 weight percent. In addition to oxygen, elemental silicon is usually present in amounts ranging up to 0.5 weight percent. These amounts of elemental silicon are not deleterious and can be tolerated. Other nonmetals, such as carbon which is likely to form silicon carbide during hot-pressing or sintering, are tolerable in small amounts.

It has now been discovered that certain elements of The Periodic Table of the Elements promote growth of β-silicon nitride whiskers and provide hot-pressed silicon nitride ceramic bodies with a fracture toughness greater than 6 MPa (m)^{½}, as measured by the Chevron notch technique and a fracture strength in excess of 120 ksi (825 MPa). Satisfactory results are obtained when the element is selected from calcium, sodium, potassium, scandium, titanium, vanadium, chromium, manganese, iron, cobalt, nickel, copper, zinc, strontium, zirconium, niobium, barium, lanthanum and mixtures thereof. The elements are beneficially selected from calcium barium, sodium, potassium, titanium, vanadium, strontium, zirconium, niobium, lanthanum, tungsten and mixtures thereof. Desirable results follow when the element is titanium, niobium, strontium or a mixture of two or more of such elements. The foregoing elements, or mixtures thereof, are added in the form of an oxide, a boride, or, except for tungsten, a carbide.

Acceptable results are believed to be attainable with derivatives of lithium, beryllium, magnesium, gallium, germanium, selenium, rubidium, molybdenum, technetium, ruthenium, rhodium, palladium, silver, cadmium, indium, tin, antimony, tellurium, cesium, cerium, praseodymium, neodymium, promethium, samarium, europium, gadolinium, terbium, dysprosium, holmium, erbium, thulium, ytterbium, lutetium, hafnium, tantalum, tungsten, rhenium, osmium, iridium, platinum, gold, thallium, lead, bismuth, polonium, francium, radium, thorium, protactinium, neptunium, americium, curium, berkelium, californium, einsteinium, fermium, mendelevium, nobelium, and lawrencium. Skilled artisans recognize that elements 58 to 71 and 90 to 103 of the Periodic Table Of The Elements, commonly referred to as "the Lanthanides", are not readily available in their pure form. They are, however available as mixtures of two or more of such elements. Such mixtures are also believed to be suitable for purposes of the present invention. Skilled artisans also recognize that certain of the elements and their derivatives may be less desirable than the others based upon considerations such as availability and cost.

The presence of calcium, particularly calcium oxide, provides advantages when silicon nitride powder compositions are formed by hot-pressing into finished ceramic bodies. Silicon nitride powders doped with up to 5.3 weight percent calcium oxide are desirable. It is believed that commercial silicon nitride powders contain only 100 ppm or less of calcium oxide.

Suitable results are also obtained with calcium boride and carbide.

Skilled artisans will recognize that results will vary depending upon both the element of choice and the particular derivative of that element or mixture of elements.

The silicon nitride starting powder can be of any size or surface area provided that the ceramic body of this invention is obtained by hot-pressing. Large particles having an average diameter in the range from 15 µm to 50 µm, for example, may be in the form of hard agglomerates which cannot be easily broken. Powders containing such agglomerates make poor ceramics. On the other hand, very fine powders having an average diameter less than 0.2 µm are difficult to obtain uniformly and to process. Preferably, the particles have an average diameter in the range of 0.2 µm to 10.0 µm; more preferably, 0.5 µm to 3.0 µm. Preferably, the surface area of the silicon nitride particles is in the range of 5 m²/g to 15 m²/g, as determined by the Brunauer-Emmett-Teller (BET) method of measuring surface area, which is described by C. N. Satterfield in *Heterogeneous Catalysis in Practice*, McGraw-Hill Book Company, 1980, pp. 102-105. More preferably, the surface area is in the range of 8 m²/g to 15 m²/g.

In the process of this invention it is required to mix the starting silicon nitride powder, described hereinabove, with a combination of an oxide of magnesium, an oxide of yttrium, and a whisker growth enhancing compound to obtain a powder mixture, which is used in preparing the tough silicon nitride ceramic body of this invention. Ordinarily, the total quantity of the magnesium oxide, the yttrium oxide and the whisker growth enhancing compound is no greater than 35 weight percent of the total weight of the powder mixture. The total quantity will depend, however, on probable end use applications for fired ceramics prepared from the powder mixture. For some applications, total quantities in excess of 35 weight percent will provide acceptable results. Preferably, however, the total quantity is in the range of 15 to 35 weight percent for medium temperature and/or the highest fracture toughness applications. By "medium temperature", it is meant use temperatures in the range from 900°C to 1200°C. Ceramic cutting tools are an example of a medium temperature and very high fracture toughness application. Preferably, the total quantity is in the range of 0.25 to 15 weight percent for high temperature and/or moderately high fracture toughness applications. By "high temperature", it is meant use temperatures of 1200°C to 1400°C. Parts for ceramic engines are an example of a high temperature and moderately high fracture toughness application.

Raw silicon nitride powders cannot be densified to high densities in the absence of densification aids, such as refractory oxides. Thus, magnesium oxide is admixed with the silicon nitride starting powder in a manner described hereinbelow for the purpose of promoting densification of the silicon nitride during processing. The magnesium oxide forms a liquid phase at between 1300°C and 1500°C into which phase the α-silicon nitride dissolves. The rate of mass transport of the α-silicon nitride is fast in magnesium oxide. Thus, the silicon nitride density increases until a critical mass is reached and precipitation occurs. Any amount of magnesium oxide which promotes this densification and produces the tough silicon nitride ceramic body of the invention is acceptable. Preferably, the magnesium oxide is present in an amount of 0.04 to 27.0 weight percent, based on the total weight of the powder mixture. More preferably, the quantity of magnesium oxide is 2.4 to 9.8 weight percent; most preferably, 4.2 to 6.1 weight percent.

In addition to a source of magnesium, the powder mixture is required to contain yttrium oxide. Yttrium oxide forms a glassy phase through which mass transport is considerably slower than in magnesium oxide. Thus, α-silicon nitride dissolves in yttrium oxide on heating, but is not readily densified. Advantageously, however, yttrium oxide promotes the rapid, essentially complete conversion of α-silicon nitride to β-silicon nitride. This conversion is most desirable because the β-silicon nitride in the form of elongated whiskers is responsible for the high fracture toughness and high fracture strength of the silicon nitride ceramic body of this invention. Any amount of yttrium oxide can be employed in the starting powder providing the quantity is sufficient to cause the essentially complete conversion of the starting silicon nitride to β-silicon nitride, and is sufficient to produce the tough silicon nitride ceramic body of the invention. Preferably, the amount of yttrium oxide employed is 0.2 to 29.5 weight percent, based on the total weight of the powder mixture. More preferably, the amount of yttrium oxide employed is 2.6 to 12.6 weight percent; most preferably, 4.3 weight percent to 8.5 weight percent.

Surprisingly, the weight ratio of yttrium oxide to magnesium oxide has been found to affect the fracture toughness of the finished ceramic, providing the whisker growth enhancing compound is also present in the powder mixture. Any weight ratio of yttrium oxide to magnesium oxide is acceptable providing the fracture toughness shows an improvement over the prior art fracture toughness value of 5 MPa (m)^{½} for nonreinforced, monolithic silicon nitride. Preferably, a Y₂O₃/MgO weight ratio of 0.3 to 5.3 is used. More preferably, the Y₂O₃/MgO weight ratio is 0.7 to 2.8; most preferably, 1.0 to 1.8. In the absence of a whisker growth enhancing compound, the Y₂O₃/MgO weight ratio has no significant effect on the fracture toughness.

The third component required to be present in the powder mixture is a whisker growth enhancing compound. This compound helps to provide a ceramic body of superior fracture toughness and high strength. Just how the whisker growth enhancing compound contributes to the excellent physical properties which are observed in the silicon nitride ceramic body of this invention is not completely understood. It is possible that the whisker growth enhancing compound improves the viscosity of the glassy phase thereby facilitating the nucleation of elongate whiskers of β-silicon nitride, the latter being primarily responsible for the improved fracture toughness. The aforementioned theory is presented with the understanding that such a theory is not binding or limiting of the scope of the invention. Any amount of the compound in the starting powder is acceptable providing the amount is sufficient to promote the formation of β-silicon nitride whiskers, described hereinbelow, and sufficient to produce the tough silicon nitride ceramic body of this invention. Preferably, the amount of the compound employed is 0.01 to 5.3 weight percent based on the total weight of the powder mixture. More preferably, the amount of whisker growth enhancing compound employed is 0.1 to 1.0 weight percent; most preferably, 0.2 to 0.5 weight percent.

It is desirable to use whisker growth enhancing compounds and oxides of magnesium and yttrium in the form of powders which are pure and sufficiently small in size. Purity is not typically a problem, because commercially available whisker growth enhancing compounds and oxides of magnesium and yttrium, particularly the oxide powders, generally contain less than 20 ppm each of assorted impurities. These levels of impurities are tolerable. Larger amounts of impurities, as for example in the 0.5 weight percent range, are not recommended as they may cause a change in the final ceramic composition and properties. A small powder particle size is favored, because dispersion is enhanced by smaller particles. Preferably, the oxide powders have an average particle size no greater than 5 µm in diameter.

The preparation of the powder mixture containing silicon nitride, the oxides of magnesium and yttrium and the whisker growth enhancing compound, is accomplished in any suitable manner. Ball-milling of the components in powder form is one acceptable manner of preparation.

The preferred method of preparing the powder mixture comprises use of an attritor with zirconia balls to prepare a finely-divided suspension of silicon nitride and a powdered combination of the oxide of magnesium, the oxide of yttrium and the whisker growth enhancing compound in a carrier medium, drying an admixture of the suspension and the attritor balls, beneficially after removing, by filtration or otherwise, excess carrier medium, and thereafter separating the attritor balls to obtain the powder mixture.

The preparation of the finely-divided suspension of silicon nitride and the combination of the oxide of magnesium, the oxide of yttrium and the whisker growth enhancing compound in a carrier medium requires no particular order of addition of the components. For example, it is possible to add the powdered combination or powdered components thereof to a colloidal suspension of silicon nitride in a carrier medium or vice versa. Alternatively, all components of the powder mixture may be added simultaneously to the carrier medium prior to attritor milling. The latter method is preferred, particularly when an organic carrier medium such as toluene or an alcohol is employed.

The carrier medium may be any inorganic or organic compound which is a liquid at room temperature and atmospheric pressure. Examples of suitable carrier media include water; alcohols, such as methanol, ethanol and isopropanol; ketones, such as acetone and methyl ethyl ketone; aliphatic hydrocarbons, such as pentanes and hexanes; and aromatic hydrocarbons, such as benzene and toluene. The carrier medium is desirably an organic liquid, preferably toluene or an alcohol such as methanol. The function of the carrier medium is to impart a viscosity suitable for mixing to the solid powders. Any quantity of carrier medium which achieves this purpose is sufficient and acceptable. Preferably, a quantity of carrier medium is employed such that the solids content is about 20 to 50 weight percent. More preferably, a quantity of carrier medium is employed such that the solids content is 35 to 45 weight percent. Below the preferred lower limit the viscosity of the solid suspension may be too low and the deagglomeration mixing may be ineffective. Above the preferred upper limit the viscosity may be too high, and the deagglomeration mixing may be difficult.

The components of the powdered combination are added to the carrier medium in any manner which gives rise to a finely dispersed suspension of the components. Typically, the process is conducted in a large vessel at room temperature (taken as 23°C) under air with vigorous stirring. Any common stirring means is suitable, such as a ball-milling device or an attrition mixer. An ultrasonic vibrator may be used in a supplementary manner to break down smaller agglomerates The attrition mixer is preferred.

To aid in the dispersion of components of the powder mixture, optionally one or more surfactants or dispersants can be added to the suspension. The choice of surfactant(s) or dispersant(s) can vary widely as is well-known in the art.

If the carrier medium is toluene, a coupling agent, such as an aluminate coupling agent commercially available from Kenrich Petrochemicals under the tradename designation KEN-REACT KA 322, may be used to aid in forming a suspension. When using an alcohol such as methanol, a dispersant such as a polyethyleneimine may be used to facilitate mixing and a flocculant such as oleic acid may be used to ease recovery of the powder mixture.

Any amount of surfactant or dispersant is acceptable providing dispersion of powder mixture components is improved. Typically, the amount of surfactant is 0.01 to 1.0 weight percent of the powder mixture.

The finely-divided suspension may now, if desired, be processed into greenware, for example, by slip-cast techniques well-known in the art, prior to eventual sintering. Alternatively, the suspension can be dried into a powder and ground for use in hot-pressing processes. Drying is accomplished by standard drying means, such as by spray-drying or oven drying under a nitrogen purge. Preferably, drying of the admixture of the powder mixture and the attritor balls is accomplished in an oven under a nitrogen purge after removal of excess carrier medium. During the drying process, additional free carrier medium is removed. The temperature of the drying depends on the boiling point of the carrier medium employed. Typically, the drying process is conducted at a temperature just below the boiling point of the carrier medium under atmospheric pressure Preferably, the carrier medium is toluene or an alcohol and the temperature of drying is about 50°C. After drying, the resulting powder is separated from the attritor balls and sieved through a screen to obtain a powder having a maximum agglomerate diameter of about 100 µm. The screen size is usually less than 60 mesh (250 µm); more preferably, less than 80 mesh (177 µm). The powder which is obtained on sieving is the powder mixture which is used in the hot-pressing process of this invention.

The preferred method of processing the powder mixture is by hot-pressing, which comprises heating the powder under pressure to obtain the densified ceramic body. Any standard hot-pressing equipment is acceptable, such as a graphite die equipped with a heating means and a hydraulic press. The hot-pressing is conducted under an inert atmosphere, such as nitrogen, to prevent the oxidation and decomposition of silicon nitride at high temperatures. The direction of pressing is uniaxial and perpendicular to the plane of the plates.

Any processing temperature and pressure will suffice providing the novel silicon nitride ceramic of this invention, described hereinbelow, is obtained. Typically, however, the temperature must be carefully controlled, because the elongate β-silicon nitride whiskers are found to form in a narrow temperature range. Preferably, the temperature is maintained during pressurizing at 1750°C to 1870°C. More preferably, the temperature is maintained at 1800°C to 1850°C. Most preferably, the temperature is maintained at 1820°C to 1840°C. Below the preferred lower temperature limit the formation of elongate β-silicon nitride whiskers may be retarded. Above the preferred upper temperature limit the silicon nitride may decompose, and special pressure equipment may be required to conduct the densification. It is noted that the accurate measurement of high temperatures, such as those quoted hereinabove, is technically difficult. Some variation in the preferred temperature range may be observed depending on the method employed in measuring the temperature. The preferred temperatures of this invention are measured by use of a tungsten-rhenium thermocouple, obtained from and calibrated by the Omega Company.

While the pressure during hot-pressing is important, it is not quite as critical a parameter as temperature. Typically, the pressure should be sufficient to cause densification of the green body. Preferably, the pressure is 3000 psig (20.8 MPa) to 6000 psig (41.5 MPa); more preferably, from 4000 psig (27.7 MPa) to 5500 psig (38.0 MPa); most preferably, 4500 psig (31.1 MPa) to 5200 psig (36.0 MPa). Below the preferred lower pressure limit the powder will not be sufficiently densified. Above the preferred upper pressure limit the powder will densify in a shorter time and at a lower temperature. Although less rigorous processing conditions seem on the surface to be desirable, the formation of elongate β-silicon nitride crystals may be inhibited at lower temperatures and shorter pressing times.

The amount of time that the powder mixture is heated under pressure should be sufficient to bring the powder to essentially complete densification. Generally, ram movement is a good indicator of the extent of densification. As long as the ram continues to move, the densification is incomplete. When the ram has stopped moving for at least 15 minutes, the densification is essentially complete at 99 percent or greater of the theoretical value. Thus, the time required for hot-pressing is the time during ram movement plus an additional 15 to 30 minutes. Preferably, the time is 15 minutes to 2 hours; more Preferably, 30 to 90 minutes; most preferably, 45 to 75 minutes.

The hot-pressing method of densification, described hereinbefore, allows for the formation of silicon nitride ceramic articles which can be used as cutting tools. A variety of shapes can be made by hot-pressing, one common shape being a flat plate. These plates may range in size from 2 inches (5 cm) in length by 1.5 inches (4 cm) in width by 0.45 inch (1 cm) in thickness to 16 inches (41 cm) in length by 16 (41 cm) inches in width by 1.0 inch (2.5 cm) in thickness. Smaller and larger plates can also be fabricated, as determined by the size of the hot-pressing plaques. Cutting tools can be fabricated by slicing and grinding these plates into a variety of cutting tool shapes.

The silicon nitride ceramic body which is produced by the hot-pressing process of this invention is a dense material having no significant porosity. Preferably, densification proceeds to greater than 95 percent of the theoretical value; more preferably, to greater than 97 percent of the theoretical value; most preferably, to greater than 99 percent of the theoretical value. Moreover, as measured by X-ray diffraction, the silicon nitride is present in the beta crystalline form, indicating essentially complete alpha to beta conversion during processing. Quite unexpectedly, the β-Silicon nitride is present predominately as single crystal, "needle-like" whiskers, as determined by both scanning electron microscopy (SEM) and transmission electron microscopy (TEM). The size of the hexagonal β-silicon nitride grains is usually 3 µm to 20 µm in length with a mean diameter of 0.5 µm to 1.5 µm; preferably 10 µm to 20 µm in length with a mean diameter 0.5 µm to 1.0 µm.

Since the whiskers are oriented randomly, it is difficult to determine exactly the percentage of silicon nitride which exists as whiskers, as opposed to equiaxed particles. The measurement is made by viewing one plane of the silicon nitride ceramic in a scanning electron microscope (SEM) and measuring the percentage by volume occupied by whiskers having an aspect ratio between 2 and 16. It is observed that the whiskers are homogeneously distributed and randomly oriented throughout the ceramic body, and that the volume occupied by the whiskers is approximately the same in all planes. Typically, the percentage of silicon nitride whiskers having an aspect ratio of between 2 and 16 is at least 20 volume percent as measured in a plane. Preferably, the percentage of silicon nitride whiskers having an aspect ratio between 2 and 16 is at least 35 volume percent as measured in a plane. Unexpectedly, the whiskers are found to have a high average aspect ratio. Typically, the average aspect ratio of the silicon nitride whiskers is at least 2.5; preferably, at least 5.5. It is noted that measuring the aspect ratio in a plane, the average aspect ratio is a lower bound. For example, a whisker which is perpendicular to the plane may have an apparent aspect ratio of less than 2; whereas the true aspect ratio may be very much greater than 2.

In addition to the β-silicon nitride phase, the ceramic body of this invention contains a glassy second phase, which constitutes no greater than about 35 weight percent of the total weight. The glassy second phase typically has a bulk chemical composition consisting essentially of 15 to 51 weight percent of magnesium oxide, 36 to 63 weight percent of yttrium oxide, 3 to 30 weight percent silica, and 0.1 to 25 weight percent of at least one whisker growth enhancing compound, as determined by neutron activation analysis; and wherein the yttrium oxide to magnesium oxide weight ratio is 0.3 to 5.3.

Small quantities of silicon carbide and two unknown phases are present in a total amount not exceeding 10 weight percent. One of the unknown phases possesses a fiber-like, layered and ordered structure. The typical size of the particles of this phase is about 500 Å (50 nm) in width by about 0.7 µm in length.

The mechanical properties of the self-reinforced silicon nitride ceramic body are readily measured by use of standard tests. In particular, fracture toughness (K_{IC}) is measured according to the Chevron notch and the Palmqvist methods described hereinafter. Fracture strength (modulus of rupture) is measured according to the Military Standard 1942b test. Hardness is measured according to the Vickers indentation test.

Fracture Strength (modulus of rupture) measures the resistance of the material to fracture under a steady load. Fracture strength is defined as the maximum unit stress which the material will develop before fracture occurs. Test bars are prepared by cutting rectangular bars (45 mm x 4 mm x 3 mm) of the silicon nitride ceramic in a plane perpendicular to the pressing direction. The bars are ground on the surfaces parallel to the pressing plates using a 500 grit grinding wheel (Military Standard 1974). The fracture strength is measured at room temperature using a 4-point bend test with 20 mm span and crosshead speed of 0.5 mm/min. Typically, the fracture strength at room temperature is at least 650 MPa. Preferably, the fracture strength at room temperature is 825 MPa to 1150 MPa; more preferably, 1000 MPa to 1150 MPa. High temperature strength is measured using a 3-point bend test with 20 mm span and crosshead speed of 0.5 mm/min. Typically, at 1000°C the fracture strength is at least 550 MPa. Typically, at 1300°C the fracture strength is at least 300 MPa.

Toughness measures the resistance of the material to fracture under a dynamic load. More specifically, fracture toughness is defined as the maximum amount of energy which a unit volume of material will absorb without fracture. In the present invention two methods are employed to measure fracture toughness. The first of these is the Chevron notch test. Test bars are prepared as described hereinabove, and additionally scored with a Chevron notch. The test bars are then subjected to a 3-point bend test with 40 mm span and crosshead speed of 0.5 mm/min. Typically, the fracture toughness of the silicon nitride ceramic body of this invention, as measured at room temperature (taken as 23°C) by the Chevron notch technique, is greater than 6 MPa (m)^{½}. Preferably, the room temperature fracture toughness is greater than 7 MPa (m)^{½}; more preferably, greater than 8 MPa (m)^{½}. Most preferably, the room temperature fracture toughness is 9 MPa (m)^{½} to 14 MPa (m)^{½}. Preferably, at 1000°C the fracture toughness is greater than 6 MPa (m)^{½}. More preferably, at 1000°C the fracture toughness is 7 MPa (m)^{½} to 12 MPa (m)^{½}.

In the evaluation of cutting tool materials it is useful to measure the Palmqvist toughness and the Vickers hardness. Both measurements can be made simultaneously on one test sample, and therefore these tests are very convenient.

The Vickers hardness test measures the resistance of the ceramic material to indentation. A sample, approximately 1 cm in length by 1 cm in width by 1 cm in height, is placed on a flat surface, and indented with a standard Vickers diamond indentor at a crosshead speed of 0.02 in/min (0.5 mm/min). The Vickers hardness number is calculated from the applied load, in this case 14 kg, and the cross-sectional area of the indentation. Prior to making the test, the test sample is polished in a special manner. First, the sample is cleaned and rough spots are flattened by use of a 220-grit diamond wheel. Next, a 45-micrometer diamond wheel is used to start the polishing. Next, the sample is treated to a series of polishings at 30 psi (0.2 MPa) and 200 rpm in the following consecutive manner: three five-minute intervals with 30-micrometer diamond paste, three five-minute intervals with 15-micrometer diamond paste, three five-minute intervals with 6-micrometer diamond paste, two five-minute intervals with 1-micrometer diamond paste, and one five-minute interval with 0.25-micrometer diamond paste. Between each interval the sample is thoroughly cleansed by washing with water and sonicating for two minutes. The Vickers hardness number of the silicon nitride ceramic of this invention is at least 1325 kg/mm² at room temperature. Preferably, the Vickers hardness number is 1340 kg/mm² to 1600 kg/mm² at room temperature; more preferably, 1450 kg/mm² to 1600 kg/mm².

The Palmqvist toughness test is an extension of the Vickers test. (See S. Palmqvist in *Jerndontorets Annalen*, 141 (1957), 300, for a description of the Palmqvist toughness test.) The test sample is prepared and indented as in the Vickers test, but the 14-kg load is additionally held for 15 seconds. The sample cracks. The measurements of the indented diagonals and the crack lengths are made on a Nikon UM2 microscope at 1000x magnification. The Palmqvist toughness (W) is directly proportional to the applied load (P) and inversely proportional to the crack length (L). Preferably, the silicon nitride ceramic body of this invention exhibits a Palmqvist toughness at room temperature or at least 37 kg/mm. Preferably, the silicon nitride ceramic body of this invention exhibits a Palmqvist toughness at room temperature of 37 kg/mm to 52 kg/mm; more preferably, 45 kg/mm to 52 kg/mm.

### Illustrative Embodiments

The following examples serve to illustrate the novel self-reinforced silicon nitride composition of this invention, the method of preparing the novel silicon nitride ceramic, and the utility of the composition as a cutting tool. All percentages are weight percent unless otherwise noted.

### Example 1

Materials: Silicon nitride (KemaNord P95-H) is employed containing 1.81 percent oxygen, 0.6 percent carbon, and the following major metallic impurities: 641 ppm iron, 315 ppm Al, and 25 ppm Ti. The silicon nitride is present in the alpha and beta crystalline forms in an α/β weight ratio of 95/5. The BET surface area of the silicon nitride powder is 10.15 m²/g and the average particle size is about 1 µm in diameter. Magnesium oxide (J. T. Baker) is employed containing less than 5 ppm each of boron, zinc, and iron. Greater than 80 percent of the MgO particles range in size from 0.2 µm to 0.7 µm in diameter. Yttrium oxide (Molycorp) is employed containing less than 10 ppm each of sodium and iron. The Y₂O₃ particles range in size from 2 µm to 5 µm in diameter. Calcium oxide (Aldrich Chemical Co.) is employed Containing less than 0.002 percent each of lead and iron. The average CaO particle size is about 3 µm in diameter.

The above-identified magnesium oxide (4.7 g) and calcium oxide powders (0.2 g) are suspended in 80 ml of water, and agitated at room temperature under air by means of a mechanical stirrer to form a two-oxide suspension. The pH of the suspension is adjusted to 11.35 by the addition of aqueous sodium silicate (7 drops). After adjustment of the pH, the suspension is ultrasonicated for 30 seconds to break down fine agglomerates. After sonication the pH is observed to drop. The pH is readjusted to 11.5 by adding 5 drops of 5 M sodium hydroxide. The suspension is mixed for about 30 minutes. Yttrium oxide powder (8.5 g), described hereinabove, is added to the suspension, and the suspension is sonicated for 30 seconds and mixed with a mechanical stirrer for 30 minutes. Silicon nitride powder (86.6 g), described hereinabove, is added to the suspension, and the suspension is mixed in an attrition mixer for about 30 minutes to ensure complete dispersion of all components. The resulting suspension is poured through a 100 mesh (149 micrometers) nylon sieve. The pH is adjusted to 9.8 by adding 10 ml of 50 percent nitric acid to increase the flocculation slightly. The finely divided suspension is dried in an oven at 90°C for a period of 12 hours under a flow of dry nitrogen gas. After drying, the resulting powder mixture is passed through a 60 mesh (250 micrometers) sieve. The powder mixture is composed of 86.6 percent silicon nitride, 4.5 percent magnesium oxide, 8.5 percent yttrium oxide, and 0.2 percent calcium oxide.

The powder mixture (80 g), described hereinabove, is poured into a graphite die in the shape of plates measuring 2 inches (5 cm) in length by 1.5 inches (3.8 cm) in width by 0.5 inches (1.3 cm) in depth. A pressure of 1000 psig ( 7 MPa) is applied to the die, while the temperature is raised from ambient to about 1200°C in about 30 minutes. At about 1200°C the pressure is gradually increased to 5000 psig (34.6 MPa) and maintained thereat. The temperature is then increased to 1825°C over a 40-minute period. The die is maintained at 1825°C and a pressure of 5000 psig (34.6 MPa) for 45 minutes. Afterwards the die is cooled over a 2 hour period to 100°C. At 1500°C the pressure is slowly released. When the die reaches room temperature, it is opened,and a silicon nitride ceramic body in the shape of a plate having the above-identified dimensions is retrieved.

The density of the silicon nitride ceramic body, prepared hereinabove, is measured by the water immersion method, as described in "Modern Ceramic Engineering" by D. W. Richerson, Marcel Dekker, 1982, and by stereology analysis from photomicrographs. The density is essentially 100 percent of theoretical, and therefore the material is essentially nonporous. Silicon nitride is present essentially in the β crystalline phase, as determined by X-ray diffraction. The bulk chemical composition of the ceramic is determined by neutron activation analysis, and is found to contain 77.2 percent silicon nitride, 20.4 percent glassy second phase, and 2.4 percent silicon carbide. The glassy second phase is found to consist of 32.4 percent magnesium oxide, 42.2 percent yttrium oxide, 2.5 percent calcium oxide, and 23.0 percent silicon oxide. Two unidentified phases are found. The first is present in a quantity of 3.9 percent, and possesses a composition of 9 percent magnesium, 59 percent silicon and 32 percent nitrogen. The second is present in a quantity of 1 percent, and possesses a fiber-like, layered and ordered structure typically 500Å (50 nm) in width and 0.7 µm in length. The microstructure of the silicon nitride ceramic, prepared hereinabove, is determined by scanning electron microscopy (SEM), as viewed in a plane. About 35 volume percent of the silicon nitride appears in the form of elongate whiskers having an aspect ratio ranging from 2 to 16. The average aspect ratio is 5.6.

The fracture strength of the above-identified silicon nitride Ceramic body, measured by the 4-point bend test described hereinbefore, is 130 × 10³ psi (900 MPa) at room temperature and 90 × 10³ psi (620 MPa) at 1000°C. The fracture toughness measured by the Chevron notch technique is 13.9 MPa (m)^{½} at room temperature and 11.5 MPa (m)^{½} at 1000°C. The Vickers hardness measured at room temperature and under a 14-kg load ranges from 1350 kg/mm² to 1400 kg/mm² and averages 1375 kg/mm². The Palmqvist toughness measured at room temperature ranges from 49.3 kg/mm to 51.1 kg/mm. It is seen that the fracture toughness of this silicon nitride ceramic body is very high.

### Examples 2 (a-n)

A series of hot-pressed silicon nitride ceramic compositions is prepared according to the procedure of Example 1, except that the composition of the powder mixture is varied as described in Table I. The Vickers hardness and the Palmqvist toughness measured at room temperature are presented in Table I for each composition.

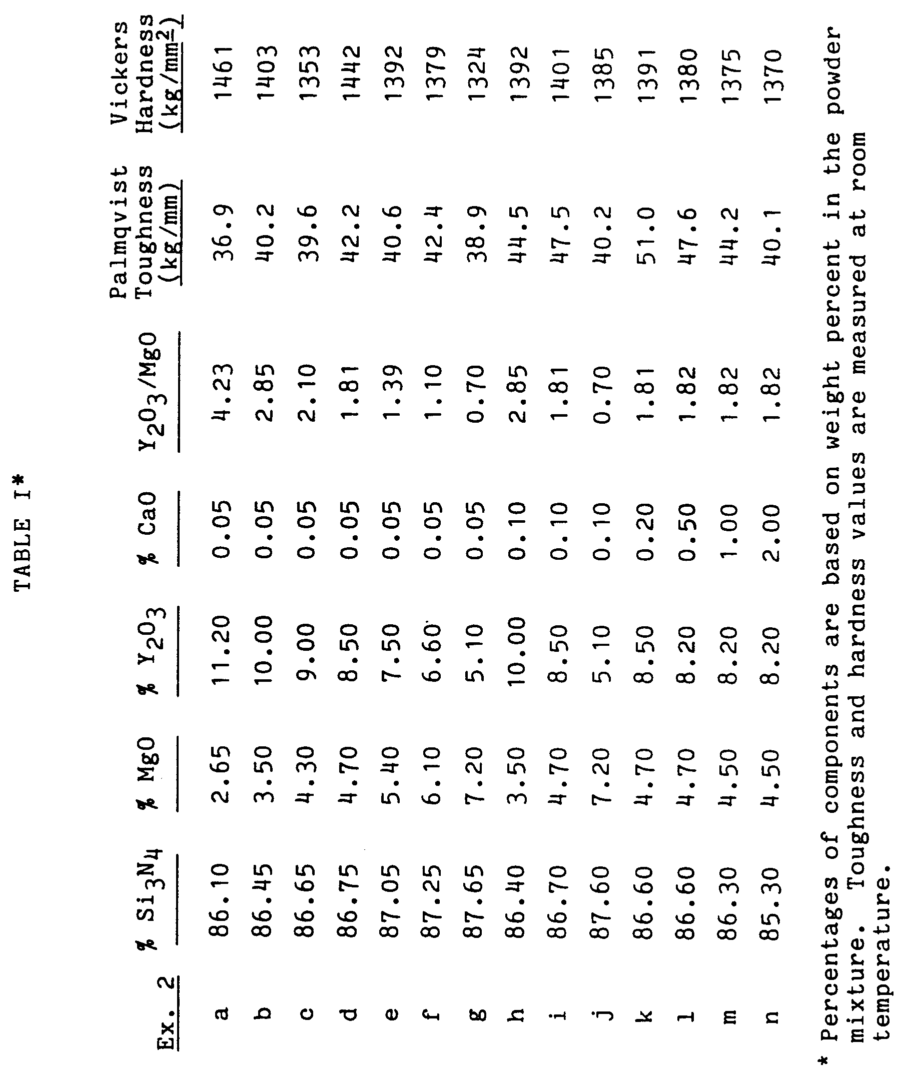

The data show that the Palmqvist toughness and the Vickers hardness vary as a function of the calcium oxide concentration and the Y₂O₃/MgO weight ratio in the powder mixture. For example, it is seen in Examples 2(d,i,k,l,m,n) that as the calcium oxide concentration increases at constant Y₂O₃/MgO ratio, the fracture toughness passes through a maximum value of 51 kg/mm at a calcium oxide concentration of 0.20 weight percent. As the calcium oxide concentration increases at constant Y₂O₃/MgO ratio, the hardness decreases.

### Comparative Experiments 1(a-d)

Four hot-pressed silicon nitride ceramic bodies are prepared as in Example 1, except that calcium oxide is omitted from the preparation. The powder compositions are listed in Table II. The Vickers hardness and the Palmqvist toughness are measured as described in Example 2, and the values are tabulated in Table II.

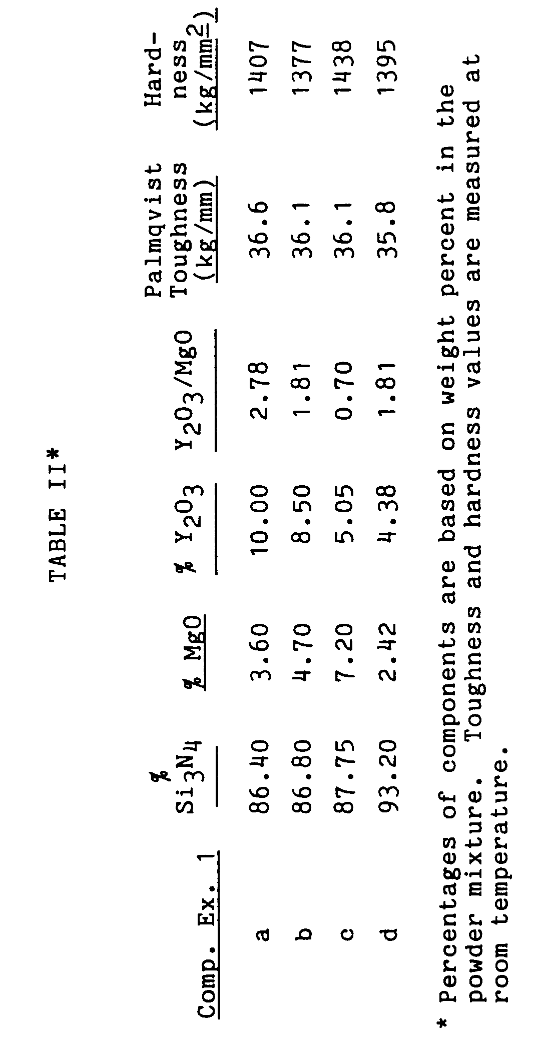

When Comparative Experiments 1(b,d) are compared with Examples 2(d,i,k,l,m,n) it is seen that the self-reinforced silicon nitride ceramic body of this invention possesses a significantly higher Palmqvist toughness than the samples which do not contain calcium oxide. The same conclusion holds on comparing Comparative Experiment 1(a) with Examples 2(b and h). Even at a low Y₂O₃/MgO ratio and a low calcium oxide concentration, the improvement in the ceramic body of this invention is noticeable, as seen in the comparison between Comparative Experiment 1(c) and Examples 2(g and j).

### Examples 3(a-c)

Three hot-pressed silicon nitride Compositions are prepared according to the procedure of Example 1, except that the powder compositions are varied as described in Table III. The Y₂O₃/MgO ratio in these powder compositions is 1.82. The Palmqvist toughness and the Vickers hardness are measured at room temperature according to the procedure in Example 2. The values obtained are presented in Table III.

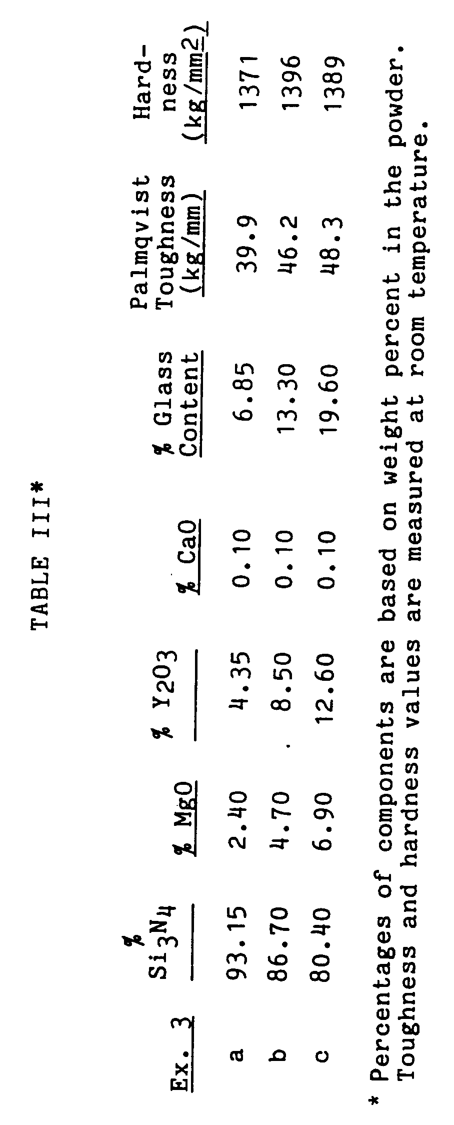

The data show that as the glass content increases, the Palmqvist toughness also increases; whereas the Vickers hardness varies in a non-linear fashion.

### Example 4

The hot-pressed silicon nitride ceramic body of Example 1 is diamond ground into a cutting tool insert. The cutting tool insert is made according to the ANSI standards in the SNG 433 Style. The cutting edge is chamfered at a 20° angle by 0.008-inch (0.203 mm) width. The insert is tested in a face milling application using a 40 HP Cincinnati #5 single spindle, knee and saddle, vertical milling machine with a 5 HP variable speed table. The work material is a nodular "ductile" cast iron measuring 2 inches (5 cm) in diameter and having a measured hardness of 207 BHN. A milling cutter having a 6-inch (15.2 cm) diameter is used with a -5° axial rake and a -5° radial rake. A 15° lead angle is employed. The machine is run at a cutting speed of 1360 surface feet (414.5 m) per minute, a 0.060-inch (1.5 mm) depth of cut, and a feed rate of 0.005 inch (0.127 mm) per revolution (or tooth). The center line of the cutter and the center line of the workpiece are coincident. No cutting fluid is used. Successive passes are taken on the cast iron, and the cutting edge is examined for flank wear and chippage after every 8 passes. Testing is terminated when the flank wear or chippage exceeds 0.015 inch (0.381 mm) in depth as measured with a 30-power microscope. It is found that an average of 26.0 passes are achieved prior to failure. The flank wear is uniform.

### Comparative Experiment 2 (a-b)

A commercial silicon nitride ceramic body is obtained from each of the following sources: (a) Boride Products (Product No. US-20) and (b) GTE Valeron Corporation (Product No. Q6). Each sample is diamond ground into a cutting tool in the manner described in Example 4. The cutting tools are used to cut nodular "ductile" cast iron in the manner described in Example 4. It is found that an average of 13.5 passes of the Boride Products sample are achieved prior to failure, and an average of 10.5 passes of the GTE sample are achieved prior to failure . In both cases the flank wear is uniform. When Comparative Experiments 2(a and b) are compared with Example 4, it is seen that the silicon nitride ceramic body of this invention significantly outperforms the commercial products.

### Examples 5(a-r) - Effect of Various Elements Upon the Properties of Self-Reinforced Si₃N₄

A series of hot-pressed silicon nitride compositions is prepared using a variation of the procedure described in Example 1 as well as a different silicon nitride powder and a variety of elements other than silicon nitride, yttrium oxide and magnesium oxide. The elements and the resultant physical properties are listed in Table IV. The physical properties include fracture strength (modulus of rupture) measured according to Military Standard 1942b, fracture toughness (Chevron notch technique), Hardness (Vickers indentation test) and Young's Modulus, a measure of stiffness calculated from the stress-strain curve obtained in the four point bend test (fracture strength). All of the tests save for Young's Modulus are described hereinabove.

The silicon nitride powder is commercially available from Ube Industries, Ltd. under the trade designation SN-E10. It contains 1.46 percent oxygen, less than 100 ppm Cl, less than 100 ppm Fe, less than 50 ppm Ca, and less than 50 ppm Al. It has a crystallinity of greater than 99.5 percent, a ratio of $\text{α/(α+β)}$ 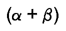 of less than five and a surface area of 11.2 m²/g.

K₂CO₃ and Na₂CO₃, both commercially available from Fisher Scientific, are suitable sources respectively for K₂O and Na₂O. Fisher Scientific also supplies La₂O₃, ZrO₂, Cr₂O₃, WO₃, MnO₂ and Fe₂O₃. Morton Thiokol supplies SrO and V₂O₄. Matheson, Coleman and Bell supply BaO. Baker Incorporated supplies TiO₂, NiO and CaO. Alfa Products supplies Sc₂O₃, NbB₂, CoO and ZnO. Mallinckrodt Inc. supplies CuO.

The materials are mixed in an attritor (Union Process batch attritor, Model 01HD - 750 ml capacity with polytetrafluoroethylene coated tube and stirrer) containing zirconia balls with a stirring rate of 330 revolutions per minute (rpm). A mixture of 225 ml toluene and 25 drops of an aluminate coupling agent, commercially available from Kenrich Petrochemicals under the trade designation Kenreact KA 322, is used as a mixing medium. The silicon nitride powder (86.3 g), the magnesium oxide powder (4.7 g), the yttrium oxide powder (8.5 g) and the powdered elemental derivative identified in Table IV (0.5 g) are added to the mixing medium and agitation is started. After about thirty minutes of mixing, an additional 100 ml of toluene is added and the agitation stirring rate is increased to 630 rpm for a period of two minutes to thin the mixture before removing it from the attritor together with the zirconia balls. Excess toluene is removed by vacuum filtration. The mixture is then dried under a flow of dry nitrogen gas. After drying, the mixture is separated from the zirconia balls using a 30 mesh (550 micrometers) stainless steel sieve and subsequently passed through 40 mesh (370 micrometers) and 60 mesh (250 micrometers) stainless steel sieves to provide a dried powder mixture composed of 86.3 percent silicon nitride, 4.7 percent magnesium oxide, 8.5 percent yttrium oxide and 0.5 percent derivative. The powder is then hot-pressed into plates and subjected to physical property testing as described in Example 1.

**TABLE IV**

| Ex.5 | Additive/ Derivative | Fracture Strength (MPa) | Fracture Toughness (MPa·m½) | Vickers Hardness (kg/mm²) |
|---|---|---|---|---|
| a | K₂O | 1062 | 8.43 | 1516 |
| b | Na₂O | 869 | 8.65 | 1555 |
| c | SrO | 869 | 8.56 | 1604 |
| d | BaO | 917 | 8.83 | 1486 |
| e | Sc₂O₃ | 896 | 8.36 | 1520 |
| f | La₂O₃ | 862 | 7.71 | 1515 |
| g | TiO₂ | 1145 | 10.32 | 1526 |
| h | ZrO₂ | 972 | 8.0 | 1512 |
| i | V₂O₄ | 1069 | 8.36 | 1514 |
| j | NbB₂ | 1034 | 8.21 | 1500 |
| k | Cr₂O₃ | 1034 | 8.1 | 1512 |
| l | WO₃ | 958 | 7.54 | 1482 |
| m | MnO₂ | 972 | -- | 1528 |
| n | Fe₂O₃ | 841 | 7.74 | 1519 |
| o | CoO | 972 | 7.75 | 1496 |
| p | NiO | 979 | 7.39 | 1538 |
| q | CuO | 855 | 7.05 | 1496 |
| r | ZnO | 945 | 6.83 | 1548 |
| s | CaO | 896 | 9.5 | 1430 |
| -- means not measured | | | | |

The data presented in Table IV demonstrate that a number of elemental derivatives provide self-reinforced silicon nitride compounds with improved physical properties.

### Example 6(a-g) - Effect of Adding Aluminum Nitride or Boron Nitride

A series of hot-pressed silicon nitride ceramic compositions is prepared according to the procedure of Example 5 except, in the case of Examples 6a - 6d, for a variation in the mixing technique due to a change in mixing medium from toluene to methanol and the substitution of a small amount (see Table Va) of aluminum nitride (Example 6a) or boron nitride (Example 6b) for silicon nitride in the compositions shown respectively for Examples 5c and 5j.

About 80 ml of methanol are added to the same attritor as used in Example 5 with stirring at a rate of 200 rpm. The powder components are added slowly over a period of about 18 minutes with additional methanol (about 50 ml) as needed to wash the powder components from the walls of the attritor. If desired for more uniform and rapid dispersion, a dispersant, such as a 50 percent mixture of polyethyleneimine in methanol, commercially available under the trade designation Corcat P-12 from Virginia Chemicals, may be added in an amount of, for example, 26 drops. After mixing for an hour at 220 rpm, a small amount (14 drops) of oleic acid is added to flocculate the slurry. The flocculated slurry is then recovered as described in Example 5.

Composition and physical property data for Examples 6a - 6h as well as 5c and 5j are summarized in Tables Va - Vc.

**Table Va**

| Ex. No. | Additives (wt-%) | | | | Fracture Strength (MPa) | Fracture Toughness (MPa·m^{½}) | Vickers Hardness (kg/mm²) |
|---|---|---|---|---|---|---|---|
| | SrO | NbB₂ | AlN | BN | | | |
| 5c | 0.5 | 0.0 | 0.0 | 0.0 | 869 | 8.56 | 1604 |
| 6a | 0.5 | 0.0 | 1.0 | 0.0 | 1096 | 10.26 | 1541 |
| 5j | 0.0 | 0.5 | 0.0 | 0.0 | 1034 | 8.21 | 1512 |
| 6b | 0.0 | 0.5 | 0.0 | 1.0 | 1076 | 8.72 | 1482 |

**Table Vb**

| Ex. No. | Additives (wt-%) | | | Fracture Strength (MPa) | Fracture Toughness (MPa·m½) | Vickers Hardness (kg/mm²) |
|---|---|---|---|---|---|---|
| | ZnO | AlN | BN | | | |
| 6c | 0.5 | 1.0 | 0.0 | 1014 | 8.44 | 1496 |
| 6d | 0.5 | 0.0 | 1.0 | 917 | 8.52 | 1537 |

**Table Vc**

| Ex. No. | BN (wt-%) | Fracture Strength (MPa) | Fracture Toughness (MPa·m½) | Vickers Hardness (kg/mm²) |
|---|---|---|---|---|
| 5c | 0.0 | 869 | 8.56 | 1604 |
| 6e | 0.5 | 896 | 9.45 | 1450 |
| 6f | 2.0 | 931 | 9.39 | 1365 |
| 6g | 3.0 | 958 | 8.76 | 1377 |

A review of the data presented in Tables Va - Vc highlights several points. First, the substitution of a minor amount of aluminum nitride or boron nitride for a corresponding amount of silicon nitride provides improvements in both fracture strength and fracture toughness at the expense of a limited reduction in hardness (Table Va). Second, the trend shown in Table Va wherein AlN appears to provide a greater improvement in fracture strength and fracture toughness than BN does not hold true for all compositions. Table Vb shows that the reverse is true when the additive is ZnO. Third, substantial increases in the amount of BN give limited improvement in fracture strength at the expense of both fracture toughness and hardness. In other words, large amounts of AlN or BN are unnecessary. In addition, a certain amount of physical property tailoring is possible with limited compositional variation. Similar results are attained with other compositions of the present invention.

### Examples 7a - 7d - Effect of Varying the Amount of the Glassy Phase

Using the procedure of Example 6, the components of Example 6b (Si₃N₄, Y₂O₃, MgO, NbB₂ and BN) and the component ratios of components other than silicon nitride, a series of four hot-pressed silicon nitride ceramic bodies are prepared with varying percentages of the Si₃N₄ phase (components other than silicon nitride). The component ratios are 1.8 (Y₂O₃/MgO), 14.7 (total glassy phase/BN) and 29.4 (total glassy phase/NbB₂). The Si₃N₄ content and physical properties are summarized in Table VI.

**Table VI**

| Ex. No. | Si₃N₄ (wt-%) | Fracture Strength (MPa) | Fracture Toughness (MPa·m½) | Vickers Hardness (kg/mm²) |
|---|---|---|---|---|
| 7a | 80 | 993 | 9.17 | 1404 |
| 7b | 85 | 1076 | 8.72 | 1482 |
| 7c | 90 | 1069 | 9.92 | 1526 |
| 7d | 95 | 1096 | 9.47 | 1548 |

The data presented in Table VI suggests that the Si₃N₄ phase content may be varied considerably without undue adverse effects upon physical properties of the resultant hot-pressed silicon nitride ceramic bodies. Similar results are attainable with other compositions of the present invention.

### Comparative Examples 3a - 3e - Effect of Omitting One or More Components of the Composition of Example 5g

Using the procedure of Example 5, a series of hot-pressed silicon nitride ceramic bodies are prepared by omitting one or more components of the composition of Example 5g and adjusting the remaining components as shown in Table VII. Table VII also shows the resultant physical properties. Example 5g is included in Table VII for ease of comparison.

**Table VII**

| Ex/ Comp Ex No. | Composition (wt-%) | | | | Fracture Strength (MPa) | Fracture Toughness (MPa·m½) | Vickers Hardness (kg/mm²) |
|---|---|---|---|---|---|---|---|
| | Si₃N₄ | Y₂O₃ | MgO | CaO | | | |
| 5g | 86.3 | 8.5 | 4.7 | 0.5 | 896 | 9.5 | 1430 |
| 3a | 86.8 | 8.5 | 4.7 | 0.0 | 607 | 5.0 | 1480 |
| 3b | 86.3 | 0.0 | 13.2 | 0.5 | 386 | 5.57 | 1449 |
| 3c | 86.8 | 0.0 | 13.2 | 0.0 | 352 | 4.65 | 1450 |
| 3d | 86.3 | 13.2 | 0.0 | 0.5 | 510 | 3.83 | 1461 |
| 3e | 86.8 | 13.2 | 0.0 | 0.0 | 572 | 5.54 | 1534 |

The data presented in Table VII clearly demonstrates the effect of omitting one or more components, as in Comparative Examples 3a - 3e, from the composition of Example 5g. Although the data contained in this table relates to the use of a calcium derivative as the additive component, similar results are attainable without undue experimentation using other derivatives of elements listed in The Periodic Table of the Elements and included within the scope of the present invention.

### Example 9 - Effect of Varying the Element's Derivative

Using the procedure of Example 6, a hot-pressed silicon nitride ceramic body is prepared of niobium oxide.

Physical property data for the body and for Example 5j are summarized in Table VIII.

**Table VIII**

| Example No. | Fracture Strength (MPa) | Fracture Toughness (MPa·m½) | Vickers Hardness (kg/mm²) |
|---|---|---|---|
| 5j | 1034 | 8.21 | 1500 |
| 9 | 896 | 7.26 | 1533 |

## Claims

1. A process for preparing a silicon nitride ceramic body, comprising:
preparing a powder mixture comprising
(a) silicon nitride in an amount sufficient to provide a ceramic body;
(b) an oxide of magnesium in an amount sufficient to promote densification of the powder;
(c) an oxide of yttrium in an amount sufficient to promote the essentially complete conversion of the starting silicon nitride to β-silicon nitride; and
(d) at least one whisker growth enhancing compound in an amount sufficient to promote the formation of β-silicon nitride whiskers, said compound being selected from borides, carbides and oxides of elements of atomic numbers 3, 4, 11, 19-32, 34, 37, 38, 40-52, 55-73, 75-79, 81-84, 87, 88, 90, 91, 93, and 95-103 or a boride or oxide of tungsten, provided that, when the whisker growth enhancing compound is an oxide of an element of atomic number 21, 58 to 71, 90, 91, 93 or 95 to 103, the powder mixture does not include a nitride or oxynitride of an element of atomic number 4, 5, 12, 13, 20, 31, 38, 49, 56, 81 or 88,
and hot-pressing the powder mixture or greenware thereof under conditions such that densification and in situ formation of β-silicon nitride whiskers having an average aspect ratio of at least 2.5 occur and that said silicon nitride ceramic body is predominately β-silicon nitride.

2. A process as claimed in Claim 1, wherein the powder mixture consists essentially of said components (a), (b), (c) and (d) and, optionally, aluminum nitride or boron nitride.

3. A process as claimed in Claim 1 or Claim 2, wherein the whisker growth enhancing compound is a boride, carbide or oxide of an element of atomic number 3, 4, 11, 19, 20, 22-32, 34, 37, 38, 40-52, 55-57, 72-79, 81-84, 87 or 88 other than a tungsten carbide.

4. A process as claimed in Claim 3, wherein the whisker growth enhancing compound is a boride, carbide or oxide of an element of atomic number 4, 20, 22-31, 38, 40-49, 56, 72-79, 81, 87 or 88 other than a tungsten carbide

5. A process as claimed in Claim 1 or Claim 2, wherein the whisker growth enhancing compound is selected from borides, carbides and oxides of calcium, sodium, potassium, scandium, titanium, vanadium, chromium, manganese, iron, cobalt, nickel, copper, zinc, strontium, zirconium, niobium, barium, lanthanum, or tungsten other than a tungsten carbide.

6. A process as claimed in Claim 5, wherein the whisker growth enhancing compound is selected from borides, carbides and oxides of calcium, barium, sodium, potassium, titanium, vanadium, strontium, scandium, zirconium, niobium, and lanthanum.

7. A process as claimed in Claim 6, wherein the whisker growth enhancing derivative is calcium oxide.

8. A process as claimed in any one of the preceding claims, wherein the whisker growth enhancing compound is 0.01 to 1.0 weight percent based upon total weight of the powder mixture.

9. A process as claimed in claim 8, wherein said amount of whisker growth enhancing compound is 0.1 to 1.0 percent.

10. A process as claimed in any one of the preceding claims, wherein the starting silicon nitride contains no greater than 10 weight percent β-silicon nitride.

11. A process as claimed in any one of the preceding claims, wherein the oxide of magnesium is 0.04 to 27.0 weight percent based on the total weight of the powder mixture and the oxide of yttrium is 0.2 to 29.5 weight percent based on the total weight of the powder mixture.

12. A process as claimed in any one of the preceding claims, wherein the weight ratio of yttrium oxide to magnesium oxide is 0.3 to 5.3.

13. A process as claimed in any one of the preceding claims, wherein silicon nitride is 65 to 99.75 weight percent based on the total weight of the powder mixture.

14. A process as claimed in any one of the preceding claims, wherein the powder mixture further comprises aluminium nitride or boron nitride in an amount of 0.01 to 5 weight percent based upon total weight of the powder mixture.

15. A process as claimed in any one of the preceding claims, wherein said hot-pressing is at a temperature of 1750°C to 1870°C.

16. A process as claimed in any one of the preceding claims, wherein said hot-pressing is at a pressure of 20 MPa (3000 psig) to 40 MPa (6000 psig).

17. A process as claimed in any one of the preceding claims, wherein the hot pressing densifies the silicon nitride ceramic to greater than 95 percent of the theoretical value.

18. A silicon nitride ceramic body having a fracture toughness greater than 6 MPa (m)^{½}, as measured by the Chevron notch technique at 23°C, comprising:
(a) a crystalline phase of β-silicon nitride of which at least 20 volume percent, as measured in a plane by scanning electron microscopy, is in the form of whiskers having an average aspect ratio of at least 2.5; and
(b) a glassy phase in an amount not greater than 35 weight percent of the total weight comprising an oxide of magnesium; an oxide of yttrium; silica; and at least one beta-silicon nitride whisker growth enhancing compound, said compound being a boride, carbide or oxide of an element of atomic number 3, 4, 11, 19-32, 34, 37, 38, 40-52, 55-73, 75-79, 81-84, 87, 88, 90, 91, 93, and 95-103 or a boride or oxide of tungsten, provided that, when the whisker growth enhancing compound is an oxide of an element of atomic number 21, 58 to 71, 90, 91, 93 or 95 to 103, the powder mixture does not include a nitride or oxynitride of an element of atomic number 4, 5, 12, 13, 20, 31, 38, 49, 56, 81 or 88.

19. A body as claimed in Claim 18, wherein the components are as defined in any one of Claims 2 to 14.

20. A body as claimed in Claim 18 or Claim 19, wherein the percentage of β-silicon nitride whiskers having an aspect ratio of 2 to 16 is at least 20 volume percent, as measured in a plane by scanning electron microscopy.

21. A body as claimed in any one of Claims 18 to 20, wherein the β-silicon nitride whiskers have an average aspect ratio of at least 5.5.

22. A body as claimed in Claim 18, wherein the glassy phase comprises 15 to 51 weight percent of the magnesium oxide, 36 to 63 weight percent of the yttrium oxide, 0.1 to 25 weight percent of the beta-silicon nitride whisker growth enhancing compound and 3 to 30 weight percent silica, no greater than 10 weight percent of other phases is present, and the weight ratio of yttrium oxide to magnesium oxide is 0.3 to 5.3, wherein all said weight percent, are based upon the total weight of said glassy phase.

23. A body as claimed in any one of Claims 18 to 22, wherein the glassy phase further comprises aluminium nitride or boron nitride in an amount of 0.01 to 15.0 weight percent based upon total glassy phase weight.

24. A cutting tool fabricated from a body as claimed in any one of Claims 18 to 23 or as prepared by a process as claimed in any one of Claims 1 to 17.

## Patentansprüche

1. Verfahren zur Herstellung eines Siliciumnitrid-Keramikkörpers, umfassend:
Herstellen einer Pulvermischung, umfassend
(a) Siliciumnitrid in einer ausreichenden Menge, um einen Keramikkörper zu ergeben,
(b) ein Oxid von Magnesium in einer ausreichenden Menge, um eine Verdichtung des Pulvers zu fördern,
(c) ein Oxid von Yttrium in einer ausreichenden Menge, um die im wesentlichen vollständige Umwandlung des Ausgangssiliciumnitrids zu β-Siliciumnitrid zu fördern und
(d) mindestens eine das Whiskerwachstum verbesserende Verbindung in einer ausreichenden Menge, um die Bildung von β-Siliciumnitridwhiskern zu fördern, wobei die Verbindung aus Boriden, Carbiden und Oxiden von Elementen der Ordnungszahlen 3, 4, 11, 19-32, 34, 37, 38, 40-52, 55-73, 75-79, 81-84, 87, 88, 90, 91, 93 und 95-103 oder einem Borid oder Oxid von Wolfram ausgewählt wird, unter der Voraussetzung, daß wenn die das Whiskerwachstum verbessernde Verbindung ein Oxid eines Elements der Ordnungszahl 21, 58 bis 71, 90, 91, 93 oder 95 bis 103 ist, die Pulvermischung kein Nitrid oder Oxynitrid eines Elements der Ordnungszahl 4, 5, 12, 13, 20, 31, 38, 49, 56, 81 oder 88 enthält,
und Heißpressen der Pulvermischung oder eines Grünkörpers davon unter derartigen Bedingungen, daß eine Verdichtung und in situ Bildung von β-Siliciumnitridwhiskern mit einem durchschnittlichen Aspektverhältnis von mindestens 2,5 auftritt und daß der Siliciumnitrid-Keramikkörper überwiegend β-Siliciumnitrid ist.

2. Verfahren nach Anspruch 1, worin die Pulvermischung im wesentlichen aus den Komponenten (a), (b), (c) und (d) und gegebenenfalls Aluminiumnitrid oder Bornitrid besteht.

3. Verfahren nach Anspruch 1 oder 2, worin die das Whiskerwachstum verbessernde Verbindung ein Borid, Carbid oder Oxid eines Elements der Ordnungszahl 3, 4, 11, 19, 20, 22 bis 32, 34, 37, 38, 40 bis 52, 55 bis 57, 72 bis 79, 81 bis 84, 87 oder 88 außer einem Wolframcarbid ist.

4. Verfahren nach Anspruch 3, worin die das Whiskerwachstum verbessernde Verbindung ein Borid, Carbid oder Oxid eines Elements der Ordnungszahl 4, 20, 22 bis 31, 38, 40 bis 49, 56, 72 bis 79, 81, 87 oder 88 außer einem Wolframcarbid ist.

5. Verfahren nach Anspruch 1 oder 2, worin die das Whiskerwachstum verbessernde Verbindung ausgewählt wird aus Boriden, Carbiden und Oxiden von Calcium, Natrium, Kalium, Scandium, Titan, Vanadium, Chrom, Mangan, Eisen, Kobalt, Nickel, Kupfer, Zink, Strontium, Zirkonium, Niob, Barium, Lanthan oder Wolfram, außer einem Wolframcarbid.

6. Verfahren nach Anspruch 5, worin die das Whiskerwachstum verbessernde Verbindung aus Boriden, Carbiden und Oxiden von Calcium, Barium, Natrium, Kalium, Titan, Vanadium, Strontium, Scandium, Zirkonium, Niob und Lanthan ausgewählt wird.

7. Verfahren nach Anspruch 6, worin das das Whiskerwachstum verbessernde Derivat Calciumoxid ist.

8. Verfahren nach einem der vorhergehenden Ansprüche, worin die das Whiskerwachstum verbesserende Verbindung in 0,01 bis 1,0 Gew.-% bezüglich des Gesamtgewichts der Pulvermischung vorliegt.

9. Verfahren nach Anspruch 8, worin der Anteil an das Whiskerwachstum verbessernder Verbindung 0,1 bis 1,0 % ist.

10. Verfahren nach einem der vorhergehenden Ansprüche, worin das Ausgangssiliciumnitrid nicht mehr als 10 Gew.-% β-Siliciumnitrid enthält.

11. Verfahren nach einem der vorhergehenden Ansprüche, worin das Oxid von Magnesium in 0,04 bis 27,0 Gew.-% auf Basis des Gesamtgewichts der Pulvermischung vorliegt und das Oxid von Yttrium in 0,2 bis 29,5 Gew.-% auf Basis des Gesamtgewichts der Pulvermischung vorliegt.

12. Verfahren nach einem der vorhergehenden Ansprüche, worin das Gewichtsverhältnis von Yttriumoxid zu Magnesiumoxid 0,3 bis 5,3 ist.

13. Verfahren nach einem der vorhergehenden Ansprüche, worin Siliciumnitrid in 65 bis 99,75 Gew.-% auf Basis des Gesamtgewichts der Pulvermischung vorliegt.

14. Verfahren nach einem der vorhergehenden Ansprüche, worin die Pulvermischung weiterhin Aluminiumnitrid oder Bornitrid an einem Anteil von 0,01 bis 5 Gew.-% auf Basis des Gesamtgewichts der Pulvermischung enthält.

15. Verfahren nach einem der vorhergehenden Ansprüche, worin das Heißpressen bei einer Temperatur von 1750°C bis 1870°C erfolgt.

16. Verfahren nach einem der vorhergehenden Ansprüche, worin das Heißpressen bei einem Druck von 20 MPa (3000 psig) bis 40 MPa (6000 psig) erfolgt.

17. Verfahren nach einem der vorhergehenden Ansprüche, worin das Heißpressen die Siliciumnitridkeramik auf mehr als 95 % des theoretischen Werts verdichtet.

18. Siliciumnitrid-Keramikkörper mit einer Bruchzähigkeit von mehr als 6 MPa (m)^{½} bei Messung durch die Chevron-Kerbungstechnik bei 23°C, umfassend:
(a) eine kristalline Phase von β-Siliciumnitrid, von der mindestens 20 Volumenprozent bei Messung in einer Ebene durch Scanner-Elektronenmikroskopie in Form von Whiskern mit einem durchschnittlichen Aspektverhältnis von mindestens 2,5 ist und
(b) eine glasartige Phase in einem Anteil von nicht mehr als 35 Gew.-% des Gesamtgewichts, umfassend ein Oxid von Magnesium, ein Oxid von Yttrium, Siliciumoxid und mindestens eine das β-Siliciumnitrid-Whiskerwachstum verbessernde Verbindung, wobei die Verbindung ein Borid, Carbid oder Oxid eines Elements der Ordnungszahl 3, 4, 11, 19 bis 32, 34, 37, 38, 40 bis 52, 55 bis 73, 75 bis 79, 81 bis 84, 87, 88, 90, 91, 93 und 95 bis 103 oder ein Borid oder Oxid von Wolfram ist, unter der Voraussetzung, daß wenn die das Whiskerwachstum verbesserende Verbindung ein Oxid eines Elements der Ordnungszahl 21, 58 bis 71, 90, 91, 93 oder 95 bis 103 ist, die Pulvermischung kein Nitrid oder Oxynitrid eines Elements der Ordnungszahl 4, 5, 12, 13, 20, 31, 38, 49, 56, 81 oder 88 enthält.

19. Körper nach Anspruch 18, worin die Komponenten wie in einem der Ansprüche 2 bis 14 definiert sind.

20. Körper nach Anspruch 18 oder 19, worin der Prozentanteil von β-Siliciumnitridwhiskern mit einem Aspektverhältnis von 2 bis 16 mindestens 20 Volumentprozent bei Messung in einer Ebene durch Scanner-Elektronenmikroskopie ist.

21. Körper nach einem der Ansprüche 18 bis 20, worin die β-Siliciumnitridwhisker ein durchschnittliches Aspektverhältnis von mindestens 5,5 aufweisen.

22. Körper nach Anspruch 18, worin die glasartige Phase 15 bis 51 Gew.-% Magnesiumoxid, 36 bis 63 Gew.-% Yttriumoxid , 0,1 bis 25 Gew.-% der das β-Siliciumnitrid-Whiskerwachstum verbessernden Verbindung und 3 bis 30 Gew.-% Siliciumoxid enthält, wobei nicht mehr als 10 Gew.-% von anderen Phasen vorhanden sind, und das Gewichtsverhältnis von Yttriumoxid zu Magnesiumoxid 0,3 bis 5,3 ist, worin alle Gewichtsprozentangaben auf Basis des Gesamtgewichts der glasartigen Phase sind.

23. Körper nach einem der Ansprüche 18 bis 22, worin die glasartige Phase weiterhin Aluminiumnitrid oder Bornitrid in einem Anteil von 0,01 bis 15,0 Gew.-% auf Basis des Gesamtgewichts der glasartigen Phase enthält.

24. Schneidewerkzeug, angefertigt aus einem Körper nach einem der Ansprüche 18 bis 23 oder hergestellt durch ein Verfahren nach einem der Ansprüche 1 bis 17.

## Revendications

1. Procédé pour préparer un corps céramique en nitrure de silicium, consistant à préparer un mélange de poudres comprenant:
(a) du nitrure de silicium en quantité suffisante pour fournir un corps céramique;
(b) un oxyde de magnésium en quantité suffisante pour favoriser la densification de la poudre;
(c) un oxyde d'yttrium en quantité suffisante pour favoriser la transformation pratiquement complète des nitrures de silicium de départ en nitrure de silicium β; et
(d) au moins un composé favorisant la croissance de barbes en quantité suffisante pour favoriser la formation de barbes en nitrure de silicium β, ledit composé étant choisi parmi les borures, les carbures et les oxydes des éléments de nombre atomique 3, 4, 11, 19 à 32, 34, 37, 38, 40 à 52, 55 à 73, 75 à 79, 81 à 84, 87, 88, 90, 91, 93 et 95 à 103 ou un borure ou un oxyde de tungstène, à condition que, lorsque le composé favorisant la croissance de barbes est un oxyde d'un élément de nombre atomique 21, 58 à 71, 90, 91, 93 ou 95 à 103, le mélange de poudres ne comprend pas un nitrure ou un oxynitrure d'un élément de nombre atomique 4, 5, 12, 13, 20, 31, 38, 49, 56, 81 ou 88,
et à presser à chaud le mélange de poudres ou un corps à l'état cru dans des conditions telles que la densificationn et la formation in situ de barbes en nitrure de silicium β ayant un rapport d'aspect moyen d'au moins 2,5 ait lieu et que ledit corps céramique en nitrure de silicium soit de façon prédominante en nitrure de silicium β.

2. Procédé selon la revendication 1, dans lequel le mélange de poudres est formé essentiellement desdits composants (a), (b), (c), et (d) et, éventuellement, de nitrure d'aluminium ou de nitrure de bore.

3. Procédé selon la revendication 1 ou la revendication 2, dans lequel le composé favorisant la croissance de barbes est un borure, un carbure ou un oxyde d'un élément de nombre atomique 3, 4, 11, 19, 20, 22 à 32, 34, 37, 38, 40 à 52, 55 à 57, 72 à 79, 81 à 84, 87 ou 88 autre qu'un carbure de tungstène.

4. Procédé selon la revendication 3, dans lequel le composé favorisant la croissance de barbes est un borure, un carbure, ou un oxyde d'un élément de nombre atomique 4, 20, 22 à 31, 38, 40 à 49, 56, 72 à 79, 81, 87 ou 88 autre qu'un carbure de tungstène.

5. Procédé selon la revendication 1 ou la revendication 2, dans lequel le composé favorisant la croissance de barbes est choisi parmi les borures, les carbures et les oxydes de calcium, de sodium, de potassium, de scandium, de titane, de vanadium, de chrome, de manganèse, de fer, de cobalt, de nickel, de cuivre, de zinc, de strontium, de zirconium, de niobium, de baryum, de lanthane, et de tungstène autre qu'un carbure de tungstène.

6. Procédé selon la revendication 5, dans lequel le composé favorisant la croissance de barbes est choisi parmi les borures, les carbures et les oxydes de calcium, baryum, sodium, potassium, titane, vanadium, strontium, scandium, zirconium, niobium et lanthane.

7. Procédé selon la revendication 6, dans lequel le dérivé favorisant la croissance de barbes est l'oxyde de calcium.

8. Procédé selon l'une quelconque des revendications précédentes, dans lequel le composé favorisant la croissance de barbes représente de 0,01 à 1,0 pourcent en poids par rapport au poids total du mélange de poudres.

9. Procédé selon la revendication 8, dans lequel ladite quantité de composé favorisant la croissance de barbes représente de 0,1 à 1,0 pourcent.

10. Procédé selon l'une quelconque des revendications précédentes, dans lequel le nitrure de silicium de départ ne contient pas plus de 10 pourcent en poids de nitrure de silicium β.

11. Procédé selon l'une quelconque des revendications précédentes, dans lequel l'oxyde de magnésium représente 0,04 à 27,0 pourcent en poids par rapport au poids total du mélange de poudres et l'oxyde d'yttrium représente de 0,2 à 29,5 pourcent en poids par rapport au poids total du mélange de poudres.

12. Procédé selon l'une quelconque des revendications précédentes, dans lequel le rapport pondéral d'oxyde d'yttrium à l'oxyde de magnésium est de 0,3 à 5,3.

13. Procédé selon l'une quelconque des revendications précédentes, dans lequel le nitrure de silicium représente de 65 à 99,75 pourcent en poids par rapport au poids total du mélange de poudres.

14. Procédé selon l'une quelconque des revendications précédentes, dans lequel le mélange de poudres comprend de plus, du nitrure d'aluminium ou du nitrure de bore, à raison de 0,01 à 5 pourcent en poids par rapport au poids total du mélange de poudres.

15. Procédé selon l'une quelconque des revendications précédentes, dans lequel le pressage à chaud a lieu à une température de 1750°C à 1870°C.

16. Procédé selon l'une quelconque des revendications précédentes, dans lequel ledit pressage à chaud a lieu sous une pression de 20 MPa (3000 psig) à 40 MPa (6000 psig).

17. Procédé selon l'une quelconque des revendications précédentes, dans lequel le pressage à chaud densifie la céramique en nitrure de silicium jusqu'à plus de 95 pourcent de la valeur théorique.

18. Corps céramique en nitrure de silicium ayant une résistance au choc ne dépassant pas 6 MPa (m)^{1/2}, mesurée par le procédé de choc sur éprouvette entaillée en Chevron à une température de 23°C, comprenant:
(a) une phase cristalline de nitrure de silicium β dont au moins 20 pourcent en volume, mesurés dans un plan au microscope électronique à balayage, sont sous forme de barbes ayant un rapport d'aspect moyen d'au moins 2,5; et
(b) une phase vitreuse en une quantité ne dépassant pas 35 pourcent en poids du poids total comprenant un oxyde de magnésium; un oxyde d'yttrium; de la silice; et au moins un composé favorisant la croissance de barbes en nitrure de silicium β, ledit composé étant un borure, un carbure ou un oxyde d'un élément de nombre atomique 3, 4, 11, 19 à 32, 34, 37, 38, 40 à 52, 55 à 73, 75 à 79, 81 à 84, 87, 88, 90, 91, 93 et 95 à 103 ou un borure ou un oxyde de tungstène, à condition que, lorsque le composé favorisant la croissance de barbes est un oxyde d'un élément de nombre atomique 21, 58 à 71, 90, 91, 93 ou 95 à 103, le mélange de poudres ne comprend pas un nitrure ou un oxynitrure d'un élément de nombre atomique 4, 5, 12, 13, 20, 31, 38, 49, 56, 81 ou 88

19. Corps selon la revendication 18, dans lequel les composants sont tels que définis dans l'une quelconque des revendications 2 à 14.

20. Corps selon la revendication 18 ou 19, dans lequel le pourcentage de barbes en nitrure de silicium β ayant un rapport d'aspect de 2 à 16 est d'au moins 20 pourcent en volume, mesuré dans un plan au microscope électronique à balayage.

21. Corps selon l'une quelconque des revendications 18 à 20, dans lequel les barbes en nitrure de silicium β ont un rapport d'aspect moyen d'au moins 5,5.

22. Corps selon la revendication 18, dans lequel la phase vitreuse comprend 15 à 51 pourcent d'oxyde de magnésium, 36 à 63 pourcent d'oxyde d'yttrium, 0,1 à 25 pourcent en poids du composé favorisant la croissance de barbe en nitrure de silicium β et 3 à 30 pourcent en poids de silice, pas plus de 10 pourcent en poids d'autres phases sont présents, et le rapport pondéral de l'oxyde d'yttrium à l'oxyde de magnésium est de 0,3 à 5,3, tous lesdits pourcentages en poids étant calculés par rapport au poids total de ladite phase vitreuse.

23. Corps selon l'une quelconque des revendications 18 à 22, dans lequel la phase vitreuse comprend de plus, du nitrure d'aluminium ou du nitrure de bore, à raison de 0,01 à 15,0 pourcent en poids par rapport au poids total de la phase vitreuse.

24. Outil de coupe fabriqué à partir d'un corps selon l'une quelconque des revendications 18 à 23 ou préparé par un procédé selon l'une quelconque des revendications 1 à 17.
